(19) Europäisches Patentamt
European Patent Office
Office européen des brevets

(11) **EP 1 871 073 B1**

(12) **EUROPEAN PATENT SPECIFICATION**

(45) Date of publication and mention
of the grant of the patent:
**04.04.2018 Bulletin 2018/14**

(51) Int Cl.:
**H04L 29/08** *(2006.01)*    **H04L 29/06** *(2006.01)*

(21) Application number: **07011879.9**

(22) Date of filing: **18.06.2007**

(54) **A NETWORK SYSTEM**

NETZWERKSYSTEM

SYSTÈME DE RÉSEAU

(84) Designated Contracting States:
**DE FR GB**

(30) Priority: **19.06.2006 JP 2006169351**

(43) Date of publication of application:
**26.12.2007 Bulletin 2007/52**

(73) Proprietor: **Kabushiki Kaisha Square Enix
(also trading as Square Enix Co., Ltd.)
Shinjuku-ku
Tokyo 160-8430 (JP)**

(72) Inventors:
• **Nakajima, Kengo
Tokyo 151-0053 (JP)**
• **Kato, Hiroaki
Tokyo 151-0053 (JP)**

(74) Representative: **Grünecker Patent- und
Rechtsanwälte
PartG mbB
Leopoldstraße 4
80802 München (DE)**

(56) References cited:
**US-A1- 2004 098 370**

• **JIN LI: "MutualCast: A Serverless Peer-to-Peer
Multiparty Real-Time Audio Conferencing
System" MULTIMEDIA AND EXPO, 2005. ICME
2005. IEEE INTERNATIONAL CONFERENCE ON
AMSTERDAM, THE NETHERLANDS 06-06 JULY
2005, PISCATAWAY, NJ, USA,IEEE, 6 July 2005
(2005-07-06), pages 602-605, XP010843259 ISBN:
0-7803-9331-7**
• **MERABTI M ET AL: "Peer-to-peer architecture
and protocol for a massively multiplayer online
game" GLOBAL TELECOMMUNICATIONS
CONFERENCE WORKSHOPS, 2004. GLOBECOM
WORKSHOPS 2004. IEEE DALLAS, TX, USA 29
NOV. - 3 DEC., 2004, PISCATAWAY, NJ,
USA,IEEE, 29 November 2004 (2004-11-29), pages
519-528, XP010783934 ISBN: 0-7803-8798-8**

EP 1 871 073 B1

## Description

The present disclosure relates to subject matter contained in Japanese Patent Application No.2006-169351, filed on June 19, 2006.

The present invention relates to a network system constructed by connecting a plurality of terminals to each other so that information can be sent and/or received through peer-to-peer communication.

Heretofore, a network system constructed by connecting a plurality of client terminals to one server is known as one example of a network system in which information can be sent and/or received between a plurality of terminals. Although such a network system has a simple structure, it has a structural weak point that a large amount of load is generated on the server or a circuit of the network system in the case where the number of client terminals is increased.

As another example of the network system, there is a network system through peer-to-peer communication (for example, see Japanese Patent Application Publication No. 2004-312331). The network system through the peer-to-peer communication is a network system in which a plurality of terminals are connected to each other so that one terminal can directly communicate with any other terminal without a server. The network system constructed so as to connect terminals to each other through the peer-to-peer communication is utilized for the Voice Chat, for example, in which audio data is sent and/or received.

However, in the case of the network system constructed using the peer-to-peer communication, there is a limit on the number of terminals that can communicate with each other through the peer-to-peer communication due to a physical factor such as a performance of the terminal and/or a network circuit. For example, in the case of the Voice Chat in which a relatively large amount of data such as audio data is sent and/or received, the number of connectable terminals is limited to about 80 pieces. Namely, a network system including a large number of terminals cannot be constructed using the peer-to-peer communication.

The article "MutualCast: A Serverless Peer-to-Peer Multiparty Real-Time Audio Conferencing System, Piscataway, NJ, USA, IEEE, 2005, by Jin Li describes an audio conferencing system that works on a serverless basis. In the conferencing system, a part of the terminals, called a "MutualCast clique" is formed, wherein the terminals are fully connected on a peer-to-peer basis. Each of the terminals forming the MutualCast clique is further connected to plural other terminals, either directly or indirectly, one through the other.

Patent document US 2004/098370 A1 describes a communication network, wherein a plurality of supernodes are connected with each other on a full peer-to-peer basis. Each of the supemodes connects further nodes operated by users. In particular, the network is used for handling search requests for files received from a particular user terminal, and transferring the respective files, when found, from a particular node whereon the file exists through the requesting node. The handling of query requests is performed via the supemodes. Thereby, a particular requested file is first searched for within the group of nodes connected to the same supernode as the requesting node. Only if not found, the search is subsequently also performed in the groups of the other supernodes. The file transfer itself is however established on a direct basis between the respective source and target nodes.

The article "Peer-to-Peer Architecture and Protocol for a Massively Multiplayer Online Game", Global Telecommunications conference workshops, Piscataway, NJ, USA, IEEE, 2004 by M. Merabati and A. El Rhalibi, describes a particular peer-to-peer structure for multiplayer online games that is adapted to a particularly large number of user terminals. Therefore, an architecture is established wherein a single main server is connected to plural region servers, which are further connected on a peer-to-peer basis with each other. Each of the regional servers further connects to a plurality of clients, also interconnected with each other on a peer-to-peer basis. A single central database server is provided. If the terminal of a new player joins the game, different manners of handling are possible. If the player to connect is the first one in the particular region, he will be assigned the role of the region server of the new region. If the new player joins in a region wherein a region server already exists, he will join the group to which the respective region server belongs, as a client.

## SUMMARY OF THE INVENTION

It is one object of the present invention to provide a network system for a large number of terminals constituting the network, in which the network configuration is flexible and can be easily changed.

This is achieved by the features of the independent claim.

It is preferable that a master group is constructed from the master terminals in the plurality of groups, one of the master terminals among the master terminals in the master group being operated to function as a master in the master group, each of the other master terminals in the master group being operated to function as a slave in the master group.

It is preferable that the terminal includes: an audio input section for inputting audio data to be sent and/or received with the peer-to-peer communication; an audio data synthesis section for synthesizing the audio data received from other terminal; and an audio output section for outputting the audio data synthesized by the audio data synthesis section.

It is preferable that the master terminal causes the audio data synthesis section to synthesize the audio data received from any terminal in the group to which the master terminal belongs and the audio data inputted through the audio input section of the master terminal, and the master terminal sends the synthesized audio data to a master terminal in other group.

It is preferable that the terminal receives positional information of an avatar related to other terminal specified by the positional information specifier of the other terminal, the other terminal belonging to the group to which the terminal belongs, and that the display screen control section of the terminal causes the display section to display the avatar on the basis of the received positional information of the avatar related to the other terminal.

It is preferable that the terminal causes the audio data synthesis section to adjust loudness of audio made as an output of the audio data received from the other terminal so as to become small as a linear distance between a position based on the positional information of the avatar related to the terminal on the virtual space and a position based on the positional information of the avatar related to the other terminal in the group to which the terminal belongs on the virtual space becomes longer, and to synthesize the audio data.

It is preferable that, in the case where an obstacle exists on a straight line connected between a position based on the positional information of the avatar related to the terminal on the virtual space and a position based on the positional information of the avatar related to the other terminal in the group to which the terminal belongs on the virtual space, the terminal causes the audio data synthesis section to synthesize the audio data so as to reduce loudness of audio on the basis of the audio data received from the other terminal.

According to the present invention, in the case where a slave terminal communicates with any terminal in other group, the slave terminal communicates with any terminal in other group through the master terminal in its own group. For this reason, even though all of the terminals constructing a network are not connected to each other, a terminal can communicate with any of other terminals so that information can be sent and/or received. Thus, it is possible to reduce the number of terminals to be directly connected to one terminal, and this makes it possible to construct the network from a large number of terminals without a limit on the number of terminals due to a physical factor or the like so that communication can be established between the terminals.

The foregoing and other objects, features and advantages of the present invention will become more readily apparent from the following detailed description of preferred embodiments of the present invention that proceeds with reference to the appending drawings.

FIG. 1 is a schematic diagram that illustrates an example of a network system according to the present invention.

FIG. 2 is a schematic diagram of a network system of the present invention which is constructed so as to have four classes.

FIG. 3 is a block diagram that shows a configuration of a terminal constructing the network system according to the present invention.

FIG. 4 is an explanatory drawing that shows a virtual space displayed on a display section of the terminal constructing the network system according to the present invention.

FIG. 5 is a flowchart regarding a process when sending and/or receiving audio data at the terminal constructing the network system according to the present invention.

FIG. 6 is a flowchart regarding a connection process between terminals constructing the network system according to the present invention.

FIG. 7 is a flowchart regarding a process when inputting audio data at the terminal constructing the network system according to the present invention.

FIG. 8 is a flowchart regarding a process of audio data when receiving the audio data at the terminal constructing the network system according to the present invention.

FIG. 9 is a drawing that illustrates a relationship of a linear distance between avatars displayed on the virtual space to loudness of audio.

FIG. 10 is a drawing that shows sending and/or receiving of the audio data at the terminal constructing the network system according to the present invention on the virtual space in which an obstacle is displayed.

FIG. 11 is a block diagram that shows another configuration of a terminal constructing the network system according to the present invention.

FIG. 12 is an explanatory drawing that shows movement of an avatar at the terminal constructing the network system according to the present invention.

Preferred embodiments of a network system according to the present invention will now be described in detail with reference to the appending drawings.

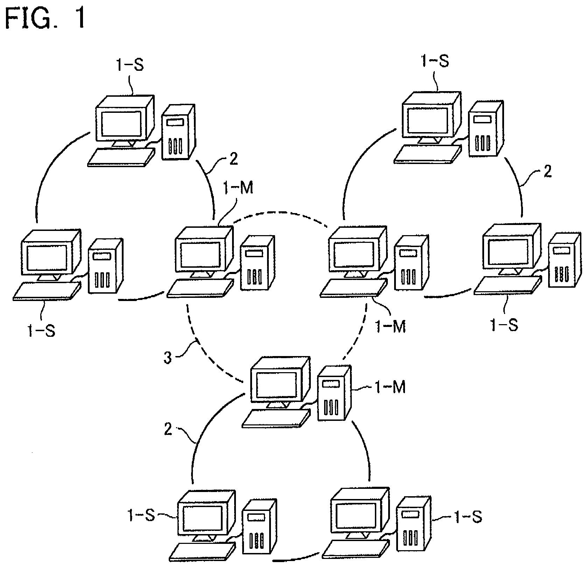

A constitutive drawing of a network system according to the present invention is shown in FIG. 1 for explaining one embodiment. In the network system, a plurality of terminals 1 are connected to each other so as to be capable of peer-to-peer communication.

Each of the plurality of terminals 1 is constructed from a central processing unit (CPU), a random access memory (RAM), a read-only memory (ROM), a storage section such as a hard disk drive (HDD), an interface and the like.

The CPU in the terminal 1 is constituted from a microprocessor. The CPU allows the terminal 1 to be connected to other terminal 1 through the peer-to-peer communication via the interface by executing a predetermined program for carrying out the peer-to-peer communication. The predetermined program is stored in the ROM. The RAM in the terminal 1 is constituted from a dynamic RAM (DRAM), synchronous DRAM (SDRAM) or the like. The RAM is utilized as a temporal memory area for execution of a program.

When the terminal 1 executes the predetermined program for carrying out the peer-to-peer communication, connection to other terminal 1 via the interface is established so that the terminal 1 can communicate with the other terminal 1 through the peer-to-peer communication. The established connection is not limited to a direct connection between the terminals 1 by cable. Such an established connection may be a connection using wireless communication. In addition, the terminals 1 may be connected to each other via the Internet, a local area network (LAN), and/or a wide area network. The connection established between the terminals 1 can appropriately be broken (disconnected) due to a state of the network and/or an intention of a user operating the terminal 1. In this case, a connection between the terminal 1 and still another terminal 1 can be established again.

This network system includes a plurality of groups 2. Each of the groups 2 includes a plurality of terminals 1 that can communicate with each other through the peer-to-peer communication. Solid lines and dotted lines shown in FIG. 1 indicate a condition to be capable of peer-to-peer communication between the two terminals 1, respectively. Each group 2 constructed from the plurality of terminals 1 (three terminals in FIG. 1) is constituted from one master terminal 1-M and a plurality of slave terminals 1-S (two in FIG. 1).

The master terminal 1-M functions as a master of the terminals 1 in the group 2 to which the master terminal 1-M belongs. The master terminal 1-M is connected to each of the slave terminals 1-S in its own group 2 so as to be capable of the peer-to-peer communication. The master terminal 1-M is further connected to the master terminals 1-M in the other groups 2 so as to be capable of the peer-to-peer communication. The master terminal 1-M and the other master terminals 1-M in the other groups 2 form a master group 3. In the case where there are a plurality of master groups 3, one master terminal 1-M among master terminals 1-M in one master group 3 is set to a master functioning as a master terminal 1-M in the master group 3 with respect to the other master terminals 1-M.

Each of the plurality of slave terminals 1-S functions as a slave in terminals 1 in the group 2 to which it belongs with respect to the master terminal 1-M therein. The slave terminal 1-S is connected to the other slave terminals 1-S in the group 2 to which it belongs so as to be capable of the peer-to-peer communication. The slave terminal 1-S is also connected to a master terminal 1-M and slave terminals 1-S in other group 2 via the master terminal 1-M in the group 2 to which it belongs so as to be capable of the peer-to-peer communication. Namely, in the network system, one slave terminal 1-S in one group 2 is indirectly connected to other slave terminals 1-S in the other group 2.

The master terminal 1-M has substantially the same configuration as that of any slave terminal 1-S except for a function to be capable of communicating with any other master terminal 1-M in other group 2. In other words, the master terminal 1-M is equivalent to each of the slave terminals 1-S in the group 2 to which it belongs, but it can communicate with each of master terminals 1-M in the other groups 2 as a representative of the terminals 1-M and 1-S in the group 2.

In the master terminal 1-M and the slave terminals 1-S, a relationship between the master and the slaves may be exchanged due to a condition of the network or the like. Namely, in response to the condition of the network, the master terminal 1-M may be changed into a slave terminal 1-S as a slave of other terminal, while the slave terminal 1-S may be changed into a master terminal 1-M as a master of the other terminals.

Moreover, a group 2 to which one master terminal 1-M and a plurality of slave terminals 1-S belong may also be fluid or uncertain. The group 2 to which one terminal 1 belongs may be changed into another group 2 due to a condition of the network or the like. Furthermore, a new group 2 may be constructed. Thus, the relationship between a master and a slave of the terminals 1 and the group 2 to which one terminal 1 belongs are usually fluid or uncertain, and they may appropriately be changed due to the condition of the network, performance of a terminal 1 connected to the network, or the like.

The network system constructed from three groups 2 to each of which three terminals 1 belong is shown in FIG. 1. In this case, the network system is constructed from nine terminals 1, which is obtained by calculating the product of the number of terminals 1 in one group 2 and the number of groups 2. By extension of this method, in the case where the number of terminals 1 belonging to one group 2 is set to "10" and the number of groups 2 is set to "10", it is possible to construct a network system including "100" terminals 1.

This network system is different from such a conventional network system that terminals can communicate with each other through peer-to-peer communication, and each terminal 1 is not connected to all of other terminals 1. In this network system, each of the slave terminals 1-S is connected to the master terminal in its own group 2, but is not connected to a slave terminal 1-S in any other group 2 directly. Further, the master terminal 1-M is connected to each of the slave terminals 1-S in its own group 2 and the master terminals in the other groups 2, but is not connected to a slave terminal 1-S in any other group 2 directly. Namely, the number of terminals 1 to which one terminal 1 is directly connected is lower than the number of terminals 1 constructing the network system.

In this network system in which terminals 1 are connected to each other so as to be constructed as described above, in the case where a slave terminal 1-S communicates with a terminal 1 in other group 2, it is possible to communicate between the terminals 1 by communicating with any terminal 1 in other group 2 via the master terminal 1-M even though all of the terminals 1 constructing the network system are directly connected to each other. Thus, information can be sent and/or received. This makes it possible to reduce the number of terminals 1 directly connected to one terminal 1. For this reason, a large number of terminals 1 can be connected to each other beyond the limit on the number of terminals 1 due to a physical factor or the like, whereby communication between the terminals 1 can be established. Therefore, it is possible to construct the network system including a large number of terminals 1 compared with the conventional network system.

Thus, in the network system shown in FIG. 1, three types of peer-to-peer communication including peer-to-peer communication between slave terminals 1-S in one group 2, peer-to-peer communication between a master terminal 1-M and a slave terminal 1-S in one group 2, and peer-to-peer communication between master terminals 1-M in two groups 2 exist. Here, the peer-to-peer communication between a master terminal 1-M and a slave terminal 1-S in one group 2 is substantially the same as the peer-to-peer communication between slave terminals 1-S in one group 2.

The communication between terminals 1 as shown in FIG. 1 will be explained using classes in which the class of the communication between the slave terminals 1-S is considered as a class lower than the class of the communication between the master terminals 1-M. The communication between the slave terminal 1-S and the master terminal 1-M is considered as communication of a lower class as well as the communication between the slave terminals 1-S. The communication between the master terminals 1-M is considered as communication of an upper class than the communication of the lower class. Namely, the master terminal 1-M can execute the communication of the upper class in addition to the communication of the lower class.

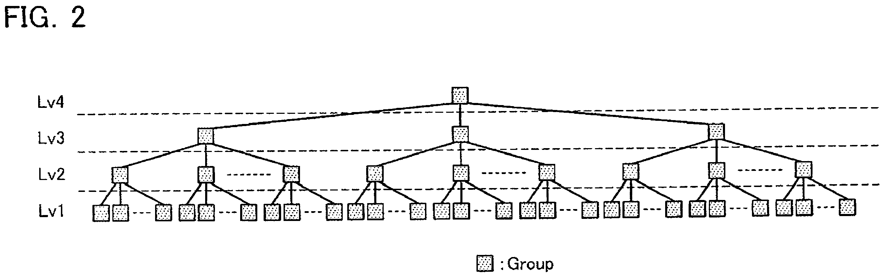

By extension of this consideration, a network system in which a still large number of terminals 1 can communicate with each other through the peer-to-peer communication can be established. A network system having four classes as shown in FIG. 2 will now be described as an example.

The network system as explained below is constructed from four classes including Lv1 to Lv4 as shown in FIG. 2. In the configuration of the network system, a plurality of groups (Lv1) are formed, and master terminals of the same number as that of the groups (Lv1) are connected to each other. The plurality of master terminals are then divided into a plurality of master groups (Lv2). Namely, a plurality of mater groups (Lv2) each constructed from the plurality of master terminals are formed. One master terminal among the plurality of master terminals in the master group (Lv2) is operated to function as a master of the master group (Lv2), while each of the other master terminals in the master group (Lv2) is operated to function as a slave of the master group (Lv2).

Further, a plurality of second master groups (Lv3) are formed from the master terminals each functioning as the master of the master group (Lv2). The master terminals respectively functioning as masters of the plurality of master groups (Lv2) are divided into a plurality of the plurality of second master groups (Lv3). Namely, a plurality of mater groups (Lv3) each constructed from the plurality of master groups (Lv2) are formed. One master terminal among the plurality of master terminals in the second master group (Lv3) is operated to function as a master of the second master group (Lv3), while each of the other master terminals in the second master group (Lv3) is operated to function as a slave of the second master group (Lv3). In this case, a third master group (Lv4) is formed from the plurality of master terminals each functioning as the master of the second master group (Lv3).

For example, as shown in FIG. 2, in the case where the number of terminals belonging to one group is "10" and 10,000 terminals execute the peer-to-peer communication therebetween, 1,000 groups (Lv1) each constructed from 10 terminals exist in the Lv1 class . Since a master terminal is provided in one group (Lv1), 1,000 master terminals exist in the 1,000 groups (Lv1).

100 master group (Lv2) each constructed from 10 master terminals are formed from 1,000 master terminals as the class of Lv2. Namely, 100 master groups (Lv2) exist in the Lv2 class. Since a master terminal for the master group (Lv2) is provided in one master group (Lv2), 100 master terminals exist in the 100 master groups (Lv2).

10 second master group (Lv3) each constructed from 10 master terminals are formed from 100 master terminals as the class of Lv3. Namely, 10 second master groups (Lv3) exist in the Lv3 class. Since a master terminal for the second master group (Lv3) is provided in one second master group (Lv3), 10 master terminals exist in the 10 second master groups (Lv2). One third master group (Lv4) is then formed from 10 master terminals.

In the constructed network system, the master terminal and slave terminals belonging to the group (Lv1) execute the peer-to-peer communication therebetween in the Lv1 class. Further, the master terminals belonging to the master group (Lv2) execute the peer-to-peer communication therebetween in the Lv2 class. Moreover, the master terminals belonging to the second master group (Lv3) execute the peer-to-peer communication therebetween in the Lv3 class. Furthermore, the master terminals belonging to the third master group (Lv4) execute the peer-to-peer communication therebetween in the Lv4 class. Namely, the master or slave terminal can communicate with any terminal in other group via the master terminals. Thus, it is possible to establish the network system constructed from a large number of terminals.

By increasing the classes in this manner, it is possible to connect a large number of terminals to each other to communicate therewith through the peer-to-peer communication. This makes it possible to send and/or receive information among the still large number of terminals.

The number of connections between terminals in the network system according to the present invention will now be compared with the number of connections between terminals in the conventional peer-to-peer network while showing a concrete example. In order to calculate the number of connections between the terminals in the conventional peer-to-peer network, a common formula for the number of connections when connecting "n" terminals to each other is first obtained. Since one terminal is to be connected to "n-1" terminals, the number of connections for one terminal is "n-1". Further, since there is the number of connection for the "n" terminals, the number of connections becomes "n × (n-1)". In this case, although the number of connections between two terminals becomes "2", the number of connections J actually required is obtained using the following formula (1) because the connection between two terminals may be "one".

$$J = \frac{n \times (n-1)}{2} \qquad (1)$$

Next, in order to calculate the number of connections between the terminals in the network system of the present invention, a common formula for the number of connections when connecting "n" terminals to each other is obtained. In the network system of the present invention, the terminals are divided into a plurality of groups. Here, it is thought that the "n" terminals are evenly divided into groups, and the number of connections is calculated by setting the number of classes to "g".

In the network system of the present invention, even a master terminal belonging to the top class belongs to any bottom class at the same time. Thus, in the case where the number of terminals in one group is "C", the total number of terminals "n" is obtained by means of the product of the number of terminals in one group "C" and the number of groups in one Lv1 class that is the bottom class. Since there is one master terminal in the group, the number of groups in the Lv1 class is equal to the number of master terminals. Further, since the master terminals constitute master groups (Lv2) per "C" master terminals, the number of terminals in the Lv2 class is obtained by means of the product of the number of master terminals in the master group (Lv2), "C", and the number of groups in the Lv2 class. Similarly, the number of groups in the Lv2 class is also obtained by means of the product of the number of second groups (Lv3), "C", and the number of second groups in the Lv3 class. Namely, in the case where the network system is constructed from two classes (that is, g = 2), the total, number of terminals thus existing becomes "C × C" because there are the "C" groups each constructed from the "C" terminals. Further, in the case where the network system is constructed from three classes (that is, g = 3), the total number of terminals thus existing becomes "C × C × C" because there are the "C × C" groups each constructed from the "C" terminals. Therefore, in the case where the number of classes is "g", the total number of terminals thus existing becomes "C × $c^{g-1}$ = $C^g$" because there are the "C $^{g-1}$" groups each constructed from the "C" terminals. As described above, since the "n" terminals are evenly divided into the groups, the number of terminals "C" in one group is obtained on the basis of this description by using the formula (2) as follows.

$$C = \sqrt[g]{n} \qquad (2)$$

Next, the number of connections will be calculated. In the case where the number of connections in one group is "k", the number of connections "k" can be calculated by means of the formula (3) as follows as well as the formula described above.

$$k = \frac{C \times (C-1)}{2} \qquad (3)$$

In the network system of the present invention, even a master terminal belonging to the top class belongs to any bottom class at the same time. For this reason, the number of connections "K" in the network system of the present invention can be calculated by using the number of connections "k" in one group and the number of all groups "M" including the master groups. As described above, the number of groups in each class is equal to the number of master terminals in the next class. In the case of two classes (that is, g = 2), since the number of master groups in the Lv2 class is "1" and the number of groups in the Lv1 class is "C", the number of all groups "M" becomes "1 + C". Further, in the case of three classes (that is, g = 3), since the number of second master group in the Lv3 class is "1", the number of master groups in the Lv2 class is "C" and the number of groups in the Lv1 class is "C × C", the number of all groups "M" becomes "1 + C + C × C". Therefore, in the case where the number of classes is "g", the number of all groups "M" is calculated by using the formula (4) as follows.

$$M = \sum_{i=0}^{g} (k \times C^i) \qquad (4)$$

Namely, in the case where the network system is utilized for "n" terminals and the "n" terminals are evenly divided to groups, the number of connections can be calculated using the formulas (2) to (4) described above.

More specifically, in the case where the network system is constructed from 100 terminals so as to be capable of the peer-to-peer communication, the number of connections "j" is 4,950 in the conventional network system. On the other hand, in the network system of the present invention, in the case of two classes (that is, g = 2), the number of terminals in one group "C" becomes "10" obtained by using the formula (2), the number of connections in one group "k" becomes "45" obtained by using the formula (3), and the number of all groups "M" becomes "11" obtained by using the formula (4). Thus, the number of connections "K" becomes "495", whereby the number of connections can be reduced to 10% compared with the conventional network system. Namely, the load on the network becomes one tenth, whereby the communication can be executed effectively about ten times. Further, in the case of 2,000 terminals , the number of connections is 1, 999 , 000 in the conventional network system. On the other hand, in the network system of the present invention, in the case of three classes, the number of connections is 14,274, whereby the number of connections can be reduced to 0.7% compared with the conventional network system. Thus, the present invention is allowed the communication to be executed more effectively.

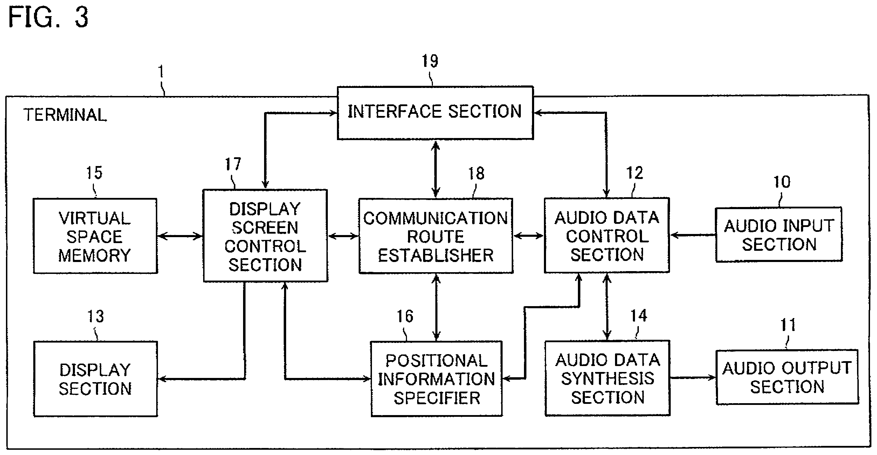

Each of the plurality of terminals 1 constituting the network system as described above includes an audio input section 10, an audio output section 11, an audio control section 12, a display section 13, an audio data synthesis section 14, a virtual space memory 15, a positional information specifier 16, a display screen control section 17, a communication route establisher 18, and an interface section 19, as shown in FIG. 3.

Information on a virtual space is stored in the virtual space memory 15. The information of the virtual space stored in the virtual space memory 15 is displayed on the display section 13 on the basis of control of the display screen control section 17 (which will be described later). Information on a plurality of virtual spaces may be stored in the virtual space memory 15. In this case, the user of the terminal 1 may be caused to select any one of the information on the virtual spaces.

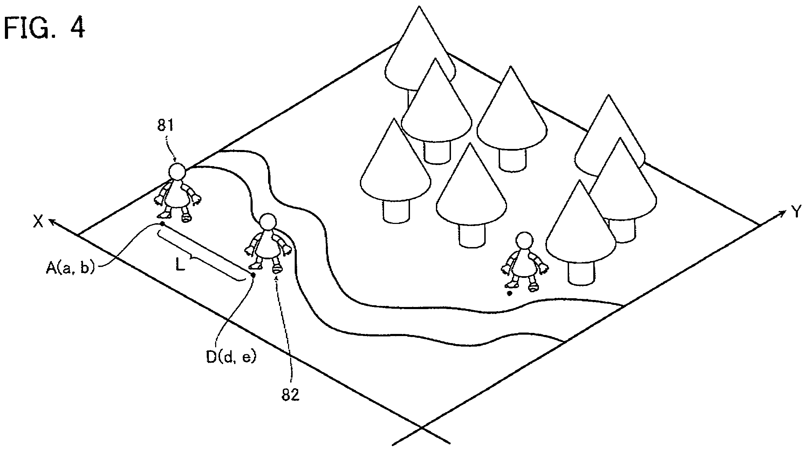

The virtual space is constituted from a two-dimensional image in which a town, a building and the like, for example, are shown to be displayed on the display section 13 and two-dimensional orthogonal coordinates so as to correspond to the image, as shown in FIG. 4. The virtual space may be constituted from a three-dimensional image and three-dimensional orthogonal coordinates. Namely, the position in the virtual space is indicated by means of the orthogonal coordinates, and this coordinates is utilized as positional information indicating the position in the virtual space. For example, images such as a tree, a river, a wall and a bridge having positional information thereof are included in the virtual space. These images are displayed in the virtual space on the basis of the positional information thereof.

Further, in the virtual space, when the network system becomes a state where its own terminal 1 (hereinafter, referred to as "one terminal") can send and/or receive audio data with other terminal 1 through the peer-to-peer communication, an image such as a person or an animal, for example, is displayed as an avatar related to the one terminal 1. Similarly, when the network system becomes a state where the other terminal 1 can send and/or receive audio data with the one terminal 1 through the peer-to-peer communication, an image such as a person or an animal, for example, is also displayed as an avatar related to the other terminal 1.

The positional information specifier 16 specifies positional information of an avatar displayed on the virtual space. The avatar is related to a terminal 1. The positional information specifier 16 obtains orthogonal coordinates from information of the virtual space stored in the virtual space memory 15, and specifies coordinates on the orthogonal coordinates that is positional information. The avatar is displayed on the virtual space on the basis of the specified coordinates.

Further, when the connection to other terminal 1 is established by means of the communication route establisher 18, the positional information specifier 16 receives information on the group to which the one terminal 1 belongs, and specifies the positional information so that the avatar related to the one terminal 1 is displayed at a position relatively near avatars related to the terminals 1 in the belonging group.

The positional information specifier 16 gives the specified positional information to the display screen control section 17 and the audio data control section 12. Further, the positional information specifier 16 sends the specified positional information to other terminal 1 via the display screen control section 17 and the interface section 19.

The display screen control section 17 obtains information on the virtual space from the virtual space memory 15. Further, the display screen control section 17 also obtains the positional information of the avatar related to the one terminal 1 from the positional information specifier 16. Moreover, the display screen control section 17 obtains the positional information of the avatar related to the other terminal 1 that is connected to the one terminal 1. The display screen control section 17 causes the display section 13 to display the virtual space on the basis of the information on the virtual space. In addition, the display screen control section 17 causes the display section 13 to display the avatar related to the one terminal 1 in the virtual space on the basis of the obtained positional information.

The display section 13 is controlled by the display screen control section 17 to display the avatar related to the one terminal 1 in the virtual space.

The audio input section 10 is constructed from a microphone, for example, to input audio data to the terminal 1. The inputted audio data is sent and/or received to and/or from other terminal 1 through the peer-to-peer communication. The audio input section 10 gives the inputted audio data to the audio data synthesis section 14, and the terminal 1 sends it to other terminal 1 via the interface section 19.

The audio output section 11 is constructed from a speaker, for example, to output audio data. The audio output section 11 outputs audio data received in the terminal 1. The audio output section 11 also outputs audio data that is received from other terminal 1 and synthesized in the audio data synthesis section 14 (which will be described later).

The audio data control section 12 controls audio data inputted from the audio input section 10 and audio data received from other terminal 1. The audio data control section 12 calculates a linear distance between avatars on the virtual space on the basis of the positional information of the avatar related to the one terminal 1 that receives audio data from other terminal 1 and the positional information of the avatar related to the other terminal 1 that outputs the audio data to the one terminal 1. The audio data control section 12 controls the audio data synthesis section 14 (which will be described later) so as to adjust loudness of audio made as output of the received audio data on the basis of the calculated linear distance.

Further, in the case where the one terminal 1 is a slave terminal 1-S, the audio data control section 12 sends the positional information of the avatar related to the one terminal 1 to the other terminal 1 thus connected as well as the audio data. Moreover, in the case where the one terminal 1 is a master terminal, the audio data control section 12 causes the audio data synthesis section 14 to synthesize the audio data received from the other terminal 1 in the belonging group 2 and the audio data inputted from the audio input section 10 in the one terminal 1.

The audio data synthesis section 14 synthesizes the audio data received from the other terminal 1 and the audio data at the one terminal 1 on the basis of control of the audio data control section 12. In the case where the terminal 1 is a master terminal 1-M in the group to which the one terminal 1 belongs. the audio data synthesis section 14 synthesizes the audio data so that it becomes one piece of audio data by mixing audios inputted from the terminals 1 in the belonging group, and the audio data is then sent to a terminal 1 in other group.

Further, the audio data synthesis section 14 adjusts loudness of audio made as output of the audio data in accordance with the linear distance between the avatars calculated by the audio data control section 12. The adjusted audio is synthesized with other audio data, and then outputted from the audio output section 11.

The communication route establisher 18 establishes the connection to other terminal 1 via the interface section 19 in order to execute the peer-to-peer communication with the other terminal 1. Since the network system of the present invention is constructed from a plurality of groups as described above, the communication route establisher 18 determines a group to which other terminal 1 should belong on the basis of a predetermined condition when the connection to the other terminal 1 is established. The predetermined condition is not particularly limited to, but includes, in order to keep a communication condition good, a condition a group to which a relatively small amount of terminals 1 belong is taken priority or is to be selected by a user, for example. When the connection to the other terminal 1 is established, the communication route establisher 18 informs the positional information specifier 16 to specify coordinates of the avatar related to the one terminal 1 on the virtual space in accordance with the belonging group. Further, when the connection to the other terminal 1 is established, the communication route establisher 18 informs the audio data synthesis section 14 of the belonging group.

The interface section 19 connects a plurality of terminals 1 to each other. Sending of audio data inputted from the audio input section 10 in a terminal 1 and receiving of audio data from other terminal 1 are executed via the interface section 19. Immediate exchange of audio data between the plurality of terminals 1 allows Chat by audio to be realized.

Each of the plurality of terminals 1 executes a predetermined program based on control of its CPU to realize the function of each component such as the audio data control section 12, the audio data synthesis section 14, the virtual space memory 15, the positional information specifier 16, the display screen control section 17 and the communication route establisher 18.

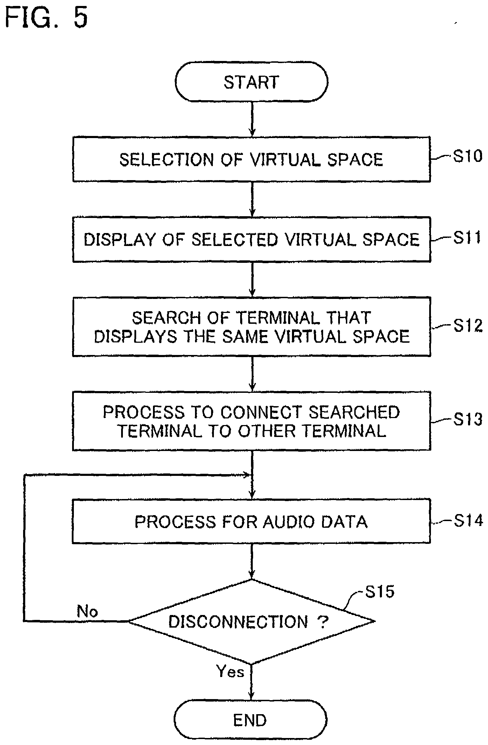

Sending and/or receiving of audio data will now be described. Processes for sending and/or receiving audio data are executed in accordance with a flowchart shown in FIG. 5. The display screen control section 17 in one terminal 1 used by a user selects a virtual space to be displayed on the display section 13 (Step S10), and obtains information on the virtual space from the virtual space memory 15.

The display screen control section 17 causes the display section 13 to display the virtual space on the basis of the obtained information on the virtual space (Step S11).

After display of the virtual space, the display screen control section 17 informs the communication route establisher 18 of this state. The communication route establisher 18 thus informed searches a terminal or terminals 1 in which the same virtual space is displayed on the display section 13 (Step S12).

The communication route establisher 18 then executes a connection process to the searched terminal 1 (which will be described later) (Step S13).

After execution of the connection process, the communication route establisher 18 informs the audio data control section 12 that the connection process is completed. The audio data control section 12 thus Informed executes a process for audio data (which will be described later) (Step S14). The process for audio data is repeatedly executed, as needed, until the user breaks (or disconnects) the connection between the one terminal 1 and the other terminal 1.

When the user breaks the connection between the one terminal 1 and the other terminal 1, the communication route establisher 18 breaks the connection to the other terminal 1 to terminate the sending and/or receiving of audio data (Step S15).

A connection process to other terminal 1 and a process of audio data will now be described in detail.

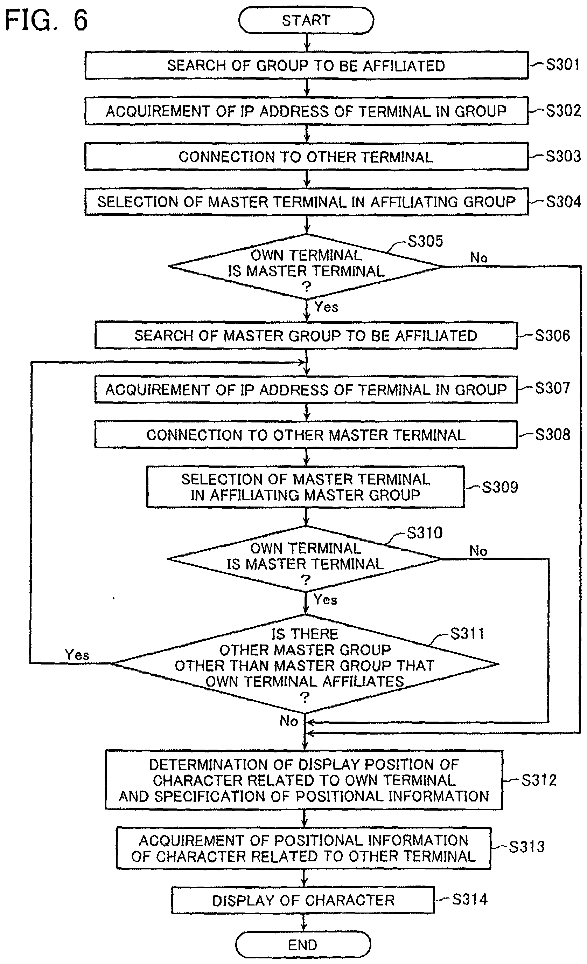

In the network system as described above, by connecting the one terminal 1 to the other terminal 1 so that information can be sent and/or received through the peer-to-peer communication by the communication route establisher 18, the terminal 1 functions as either a master terminal 1-M or a slave terminal 1-S. The connection process to the other terminal 1 will now be described with reference to FIG. 6.

The communication route establisher 18 in the one terminal 1 searches a group 2 to which a terminal 1 should belongs while checking a communication status between the terminals 1 in the group 2 to be connected in the network (Step S301).

The condition to belong to the group 2 is not particularly limited, but can be changed appropriately. For example, a condition that a group 2 to which a relatively small amount of terminals 1 belong is taken priority or is to be selected by a user may be mentioned.

After the search, the communication route establisher 18 obtains an IP (Internet Protocol) address of each of the other terminals 1 belonging to the searched group 2 (Step S302).

The communication route establisher 18 then connects the one terminal 1 to the other terminal 1 so as to be capable of the peer-to-peer communication using the obtained IP address (Step S303).

The communication route establishers 18 of the plurality of terminals 1 connected to be capable of the peer-to-peer communication select a master terminal 1-M in the belonging group 2 (Step S304). For example, the terminal 1 whose communication speed is the highest in the belonging group 2 may be selected as a master terminal 1-M. Each of the terminals 1 in the group 2 other than the master terminal 1-M functions as a slave terminal 1-S.

After the selection of the master terminal 1-M, the communication route establisher 18 confirms whether or not the one terminal 1 is selected as a master terminal 1-M (Step S305). In the case where the communication route establisher 18 confirms at Step S305 that the one terminal 1 is not the master terminal 1-M (that is, the one terminal 1 is a slave terminal 1-S), the processing flow shifts to Step S312.

On the other hand, the case where the communication route establisher 18 confirms at Step S305 that the one terminal 1 is the master terminal 1-M, the processing flow shifts to Step S306.

When it is confirmed that the one terminal 1 is the master terminal 1-M, the communication route establisher 18 searches a master group 3 to which the one terminal 1 should belong (Step S306). In this case, in the same manner as described above, the communication route establisher 18 searches the master group 3 while checking a communication status between the master terminals 1-M.

After the search, the communication route establisher 18 obtains an IP address of each of the other master terminals 1-M belonging the searched master group 3 (Step S307).

The communication route establisher 18 then connects the one master terminal 1-M to the other master terminal 1-M so as to be capable of the peer-to-peer communication using the obtained IP address (Step S308).

The communication route establishers 18 of the plurality of master terminals 1-M connected so as to be capable of the peer-to-peer communication select a master terminal 1-M in the belonging master group 3 in the same manner as described above (Step S309).

After the selection of the master terminal 1-M, the communication route establisher 18 confirms whether or not the one terminal 1 is the master terminal 1-M in the master group 3 (Step S310). In the case where the communication route establisher 18 confirms at Step S310 that the one terminal 1 is not the master terminal 1-M in the master group 3, the processing flow shifts to Step S312.

On the other hand, in the case where the communication route establisher 18 confirms at Step S310 that the one terminal 1 is the master terminal 1-M in the master group 3, the processing flow shifts to Step S311.

When it is confirmed that the one terminal 1 is the master terminal 1-M in the master group 3, the communication route establisher 18 determines whether or not there is any master group 3 other than the belonging master group 3 (Step S311). As a result, in the case where the communication route establisher 18 determines that there is any master group 3 other than the belonging master group 3, the processing flow shifts to Step S306, and the processes at Steps S306 to S311 are repeated. Thus, it is possible to establish the network having classes as shown in FIGS. 1 and 2.

On the other hand, in the case where the communication route establisher 18 determines that there is no master group 3 other than the belonging master group 3, the processing flow shifts to Step S312.

The communication route establisher 18 informs the positional information specifier 16 and the display screen control section 17 that the connection to the other terminal 1 is established. The positional information specifier 16 thus informed specifies coordinates of the avatar related to the one terminal 1 on the virtual space displayed on the display section 13 (Step S312). In this case, the positional information specifier 16 determines the coordinates so that the avatar related to the one terminal 1 is displayed at the coordinates relatively near the coordinates of the avatars related to the other terminals 1 in the belonging group 2.

The positional information specifier 16 then obtains positional information of the avatar related to each of the other terminals 1 via the interface section 19 (Step S313). The positional information specifier 16 gives the obtained positional information as well as the positional information of the avatar related to the one terminal 1 to the display screen control section 17.

When the positional information on the avatars related to the one terminal 1 and the other terminal 1 is received, the display screen control section 17 causes the display section 13 to display the avatars related to the one terminal 1 and the other terminal 1 on the basis of the received positional information (Step S314).

Thus, the one terminal 1 in which the connection to the other terminal 1 is established can send and/or receive audio data through the peer-to-peer communication. A process for the audio data will now be described. Here, the process for the audio data is divided into a process for input of the audio data and a process for output of the audio data, each of which will be described separately. In this regard, the process for input of the audio data and the process for output of the audio data may be executed at the same time.

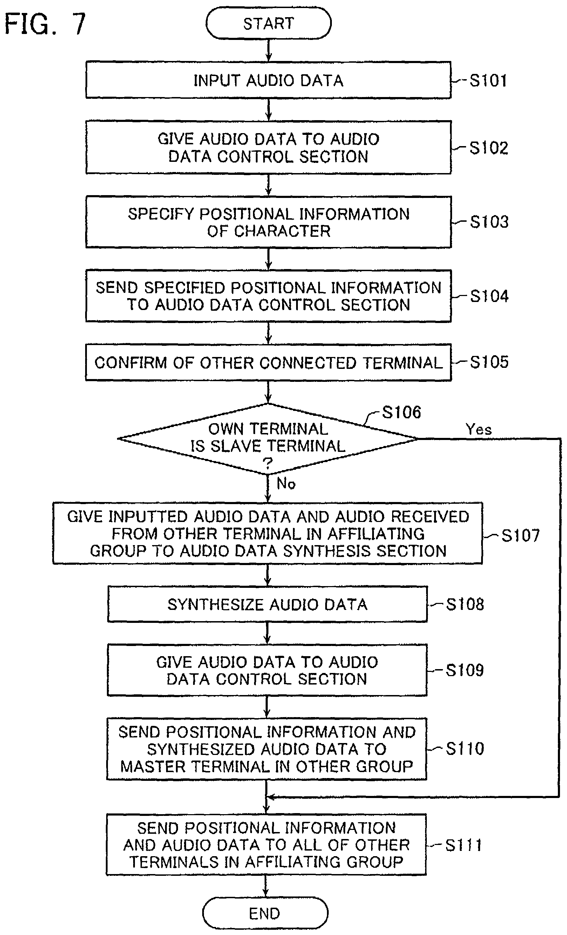

The process for input of the audio data will now be described with reference to FIG. 7. Audio data is first inputted from the audio input section 10 (Step S101) . The audio input section 10 gives the inputted audio data to the audio data control section 12 (Step S102).

When the audio data is received, the audio data control section 12 requests the positional information specifier 16 to specify positional information of the avatar related to the one terminal 1. The avatar is displayed on the virtual space. When the request is received, the positional information specifier 16 specifies the positional information of the avatar displayed on the virtual space (Step S103).

After the specification of the positional information, the positional information specifier 16 gives the specified positional information to the audio data control section 12 (Step S104). When the positional information is received, the audio data control section 12 requests the communication route establisher 18 to check a connection environment of the one terminal 1 and the other terminal 1 in order to send the audio data and the positional information to the other terminal 1.

When the request is received, the communication route establisher 18 confirms the connection environment of the one terminal 1 and the other terminal 1 (Step S105). In this case, the communication route establisher 18 detects all of other terminals 1 connected to the one terminal 1 to specify the other terminals 1 in the group 2 to which the one terminal I belongs. The communication route establisher 18 searches the terminal 1 connected to the master terminal 1-M in other group 2 among all of the terminals 1 in the group 2 to which the one terminal 1 belongs.

The communication route establisher 18 then confirms whether or not the one terminal 1 is a slave terminal 1-S (Step S106). In the case where it is confirmed that the one terminal 1 is a slave terminal 1-S, the communication route establisher 18 informs the audio data control section 12 of the situation, and the processing flow shifts to Step S111.

In the case where it is confirmed at Step S107 that the one terminal 1 is not a slave terminal 1-S (that is, the one terminal 1 is the master terminal 1-M), the communication route establisher 18 informs the audio data control section 12 of the situation. The audio data control section 12 thus informed gives the audio data received from the other terminal 1 in the group 2 to which the one terminal 1 belongs and the inputted audio data to the audio data synthesis section 14 (as will be described later) (Step S107).

When the audio data are received, the audio data synthesis section 14 synthesizes the inputted audio data and the audio data received from the other terminal 1 in the group 2 to which the one terminal 1 belongs to create one piece of audio data (Step S108). The audio data synthesis section 14 gives the synthesized audio data to the audio data control section 12 (Step S109).

When the synthesized audio data is received, the audio data control section 12 sends the positional information and the synthesized audio data to the master terminal 1-M in the other group 2 via the interface section 19 (Step S110). Here, in the case where there are a plurality of master groups 3, the audio data control section 12 sends the synthesized audio data to another master terminal 1-M in the belonging master group 3, and the processing flow then shifted to Step S111.

The audio data control section 12 sends the positional information and the inputted audio data to all of other terminal 1 in the group 2 to which the one terminal 1 belongs via the interface section 19 (Step S111). The sent audio data is received by each of the other terminals 1.

Thus, in the case where the one terminal 1 is a master terminal 1-M, the one piece of audio data in which the audio data in the group to which the one terminal 1 belongs are synthesized are sent to the master terminals 1-M belonging to the other group 2. Therefore, the master terminal 1-M in the other group is connected to only the one terminal 1 to receive the one piece of audio data, whereby the master terminal 1-M in the other group can receive the audio data equivalent to all of the audio data sent and/or received in the group 2 to which the one terminal 1 belongs. This results in reduction of the load on the network and the terminals 1. It is possible to receive audio data inputted from a large number of terminals 1 connected to each other beyond the limit on the number of connectable terminals. Namely, a large number of users can make a conversation with each other via the terminals 1 and the network system of the present invention.

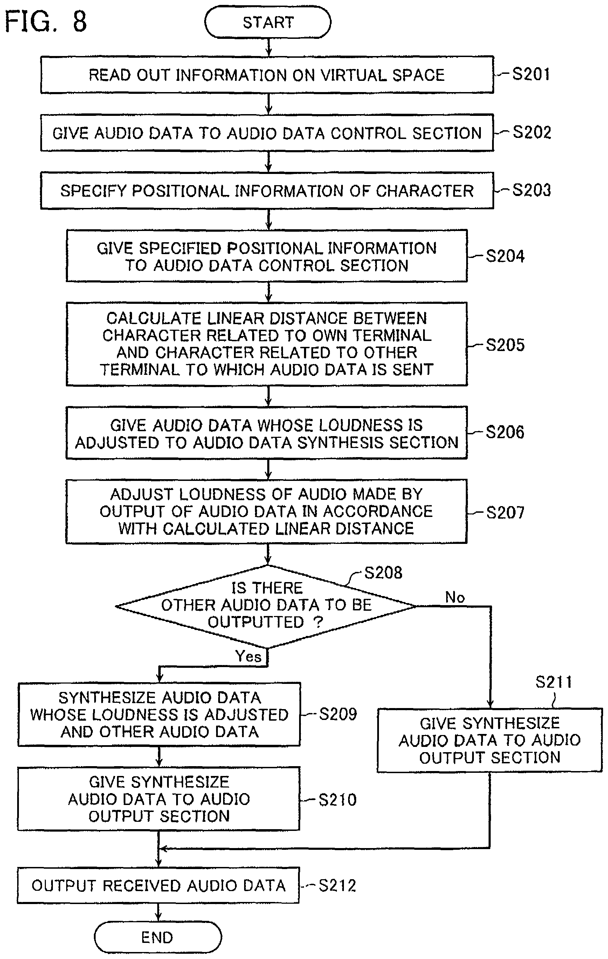

The sent audio data and the positional information are received by the other terminal 1, and outputted from the audio output section 11 in the other terminal 1. The receiving and output of the audio data will now be described with reference to FIG. 8.

The terminal 1 connected to the network receives the audio data sent from the other terminal 1 via the interface section 19 (Step S201). The terminal 1 then gives the received audio data to the audio data control section 12 (Step S202).

When the audio data is received, the audio data control section 12 requests the positional information specifier 16 to specify positional information of an avatar related to the one terminal 1. The avatar is displayed on the virtual space. The positional information specifier 16 thus requested specifies the positional information of the avatar displayed on the virtual space (Step S203).

After the specification of the positional information, the positional information specifier 16 gives the specified positional information to the audio data control section 12 (Step S204). When the positional information is received, the audio data control section 12 calculates a linear distance on the virtual space between the avatar related to the one terminal 1 and the avatar related to the other terminal 1 to which the audio data is sent on the basis of the positional information of the other terminal 1 to which the audio data is sent and the positional information specified by the positional information specifier 16 (Step S205).

As shown in FIG. 4, the positional information of the avatar displayed on the virtual space is shown as the coordinates indicating the position on the virtual space. Thus, the linear distance can be obtained by calculating the distance between the two coordinates.

For example, as shown in FIG. 4, an avatar 81 related to the one terminal 1 is displayed at a position "A" (coordinates (a, b)) on the two-dimensional virtual space (that is, two-dimensional coordinates indicated by "X" and "Y" axes), while an avatar 82 related to the terminal 1 to which the audio data is sent is displayed at a position "D" (coordinates (d, e)). In this case, the positional information specifier 16 specifies the coordinates (a, b) of the position "A" of the avatar 81 related to the one terminal 1 as the positional information. The positional information (the coordinates (d. e) of the position "D") of the avatar 82 related to the terminal 1 to which the audio data is sent is sent together with the audio data. The distance of a straight line L connected between the two avatars is calculated by means of the formula "$\{(a - d)^2 + (b - e)^2\}^{1/2}$" because it is a distance between two points of the position "A" (a, b) and the position "D" (d, e).

Similarly, in the case where the two avatars are respectively displayed at positions of coordinates (a, b, c) and (d, e, f) on the three-dimensional virtual space (that is, three-dimensional coordinates indicated by "X", "Y" and "Z" axes), the linear distance between the two avatars is calculated by means of the formula "$\{(a - d)^2 + (b - e)^2 + (c - f)^2\}^{1/2}$.

When the linear distance is calculated in this manner, the audio data control section 12 gives the received audio data and information on the calculated linear distance to the audio data synthesis section 14 (Step S206).

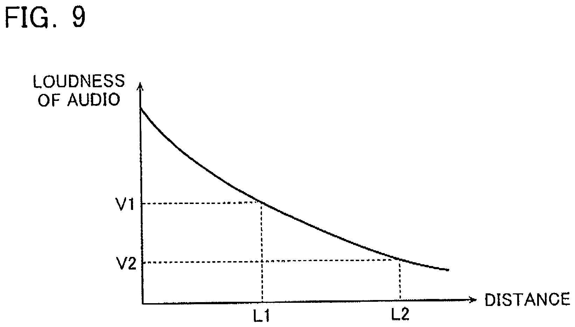

When the audio data and the information on the linear distance are received, the audio data synthesis section 14 adjusts loudness of audio made as output of the audio data in accordance with the calculated linear distance (Step S207). In this case, the loudness of audio is adjusted so that the loudness of audio made as output of the audio data becomes smaller as the linear distance becomes longer. For example, as shown in FIG. 9, the audio data synthesis section 14 may in advance include a formula in which the loudness of audio is continuously changed from V1 to V2 when the linear distance becomes longer from L1 to L2. Thus, the audio data synthesis section 14 can adjust the loudness of audio made as output of the audio data in accordance with the received linear distance. As a result, in the same manner that voice (or audio) from a person far away is hardly heard as the real world, as the linear distance becomes longer, the loudness of audio made as output of the audio data becomes smaller. Therefore, it is possible to make a Chat in the state like a conversation of the real world.

When the loudness of audio made as output of the audio data is adjusted, the audio data synthesis section 14 confirms whether or not there is any other audio data to be outputted (Step S208). Namely, the audio data synthesis section 14 confirms whether or not there is any audio data to be outputted from the audio output section 11 together with the received audio data.

As the audio data to be outputted together, audio data from the terminal 1 other than the terminal 1 to which the adjusted audio data is sent; sounds outputted from a specific position on the virtual space, which is actually heard in the real world, such as a sound of a river flowing, a song of a bird, a sound of trees flying in the wind, a music on the radio and a sound of a car driving off; and the like may be mentioned.

In the case where the audio data synthesis section 14 confirms at Step S208 that there is no audio data to be outputted other than the adjusted audio data, the processing flow shifts to Step S211. The audio data synthesis section 14 gives the audio data whose loudness is adjusted to the audio output section 11 (Step S211), and then the processing flow shifts to Step S212.

In the case where the audio data synthesis section 14 confirms at Step S208 that there is audio data to be outputted other than the adjusted audio data, the processing flow shifts to Step S209. The audio data synthesis section 14 synthesizes the audio data whose loudness is adjusted and other audio data (Step S209). In this case, as described above, loudness of audio made as output of the other audio data is also adjusted in accordance with the linear distance.

After the synthesis of the audio data, the audio data synthesis section 14 gives the synthesized audio data to the audio output section 11, and then the processing flow shifts to Step S212.

The audio output section 11 outputs the received audio data (Step S212).

Thus, it is possible to send and/or receive audio data between the terminals 1. The process as described above when to send the audio data is executed immediately whenever audio is inputted from the audio input section 10. Further, the process as described above when to receive the audio data is executed whenever audio data is received. Thus, since sending and receiving of the audio data is exchanged immediately, the users utilizing the terminals 1 can make a Chat via avatars related to the respective terminals 1 displayed on the virtual space.

Further, the master terminal 1-M synthesizes the audio data received from other terminals 1 in the group 2 to which the master terminal 1-M belongs to create one piece of audio data, and then sends the audio data to the master terminal 1-M in other group 2. Thus, the master terminal 1-M can receive the audio data from other group 2. Therefore, the network system of the present invention allows load on the terminals and the network to be reduced even when audio data is sent and/or received. This makes it possible to send and/or receive the audio data with a large number of users. Namely, although it cannot be realized due to a physical factor conventionally, 80 or more terminals 1 can be connected to each other to construct a network system, and the present invention allows a large number of users to make a Chat using the network system constructed from the terminals 1.

Moreover, the network system of the present invention controls each of the terminals 1 so that information on the virtual space is stored in the virtual space memory 15, the positional information specifier 16 specifies positional information of the avatar related to the one terminal 1, and the display screen control section 17 causes the display section 13 to display the avatar on the basis of the information on the virtual space and the positional information of the avatar. Furthermore, the network system of the present invention allows the one terminal 1 to receive positional information of an avatar related to other terminal 1 from the other terminal 1, and to display the avatar of the other terminal 1 on the basis of the positional information in addition of the avatar related to the one terminal 1. Thus, the user can not only recognize the connection relationship between the terminals 1 visually, but also make a conversation on the virtual space via the avatars by sending and receiving audio data between the terminals 1 to make a Chat. In addition, a large number of users can make a conversation in the network system described above, and this makes it possible to hold a meeting.

In the real world, voice of a person may be blocked due to an obstacle interrupting transmittance of audio. Upon sending and/or receiving audio data using the peer-to-peer communication as described above, such an obstacle may be displayed on the virtual space.

The obstacle displayed on the virtual space is stored as obstacle information in the virtual space memory 15 together with the information of the virtual space. The obstacle information is constituted from screen information of the obstacle, information on the obstacle and positional information to be displayed on the virtual space. For example, in the case where it is determined that the obstacle exists on a straight line connected between avatars on the basis of positional information of the avatar related to the one terminal 1 and positional information of the avatar related to the other terminal 1 in the group 2 to which the one terminal 1 belongs, the terminal 1 that receives the audio data controls loudness of audio made as output of the audio data. In this case, as the information on the obstacle, for example, restriction that loudness of audio on the basis of the audio data is set to 50% of the normal state compared with the case where there is no obstacle when the received audio data is outputted, restriction that the audio data is not outputted, and the like may be mentioned. As another example of such an obstacle, a wall that absorbs audio with a predetermined absorption ratio, an intricate landscape and the like may be mentioned.

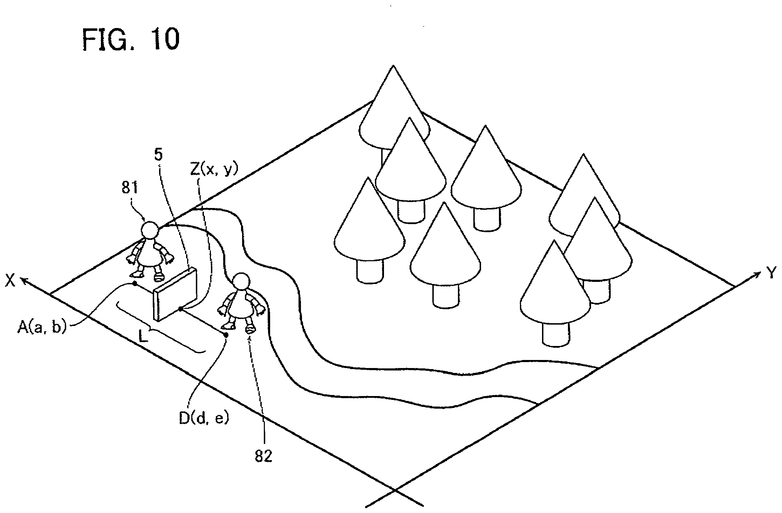

More specifically, a process in the case where there is an obstacle will be described with reference to FIG. 10. When one terminal 1 is connected to other terminal 1 so as to be capable of the peer-to-peer communication as described above, as shown in FIG. 10, an avatar 81 related to the one terminal 1 is displayed on the virtual space so as to have positional information of coordinates (a, b) at a position "A". In addition, an avatar 82 related to the other terminal 1 is displayed on the virtual space so as to have positional information of coordinates (d, e) at a position "D". Here, an obstacle 5 is displayed on the virtual space at a position "Z" (coordinates (x, y)) on a straight line L connected between the position "A" (a, b) at which the avatar 81 is displayed and the position "D" (d, e) at which the avatar 82 is displayed.

When the one terminal 1 receives audio data and positional information from the other terminal 1 in the group 2, the display screen control section 17 derives the straight line L on the virtual space on the basis of the positional information of the avatar 81 related to the one terminal 1 and the positional information received from the other terminal 1. The display screen control section 17 obtains the coordinates through which the straight line L passes, and confirms whether or not the coordinates at the position "X" at which the obstacle 5 is displayed are included in the confirmed (coordinates. Thus, the display screen control section 17 confirms whether or not the obstacle 5 exists on the straight line L connected between the avatar 81 and the avatar 82. The display screen control section 17 informs the audio data control section 12 of presence or absence of an obstacle on the straight line L.

When it is informed from the display screen control section 17 that no obstacle exists on the straight line L, the audio data control section 12 calculates a linear distance of the straight line L as described above. The audio data synthesis section 14 adjusts loudness of audio made as output of the audio data on the basis of the calculated linear distance. On the other hand, when it is informed from the display screen control section 17 that an obstacle 5 exists on the straight line L, the audio data control section 12 gives the information on the obstacles to the audio data control section 12. The audio data control section 12 calculates the linear distance of the straight line L. The audio data control section 12 then gives the calculated linear distance and the information of the obstacle 5 to the audio data synthesis section 14. The audio data synthesis section 14 adjusts the loudness of audio made as output of the audio data on the basis of the calculated linear distance. Further, the audio data synthesis section 14 analyzes the information of obstacle 5, and controls (or restricts) the loudness of audio made at the output of the audio data in accordance with the analyzed information of the obstacle 5 to synthesizes it and the other audio data. As another example, it is assumed that the case where a wall absorbing audio (or voice) is provided as an obstacle. When it is informed that the wall is provided on the straight line L, loudness of audio made as output of audio data is adjusted on the basis of the linear distance, and the audio is controlled (or restricted) so that the loudness of audio is multiplied by a predetermined absorption ratio. Moreover, when it is informed that the straight line passes through an intricate landscape, a curved line is formed between the avatars so as to go around the intricate landscape, and the length of the curved line is calculated. Loudness of audio made as output of audio data is adjusted on the basis of the calculated length.

By sending and/or receiving audio data in this manner, it is possible to make a Chat by audio (or voice) in the state similar to that in a conversation in the real world. Although it has been explained that the positional information of the obstacle described above is indicated by the coordinates of one position, the present invention is not limited thereto. For example, the positional information of an obstacle may be information on a straight line or a curved line connected between an arbitrary position and another arbitrary position, or may be positional information of a plurality of positions.

In the present invention, it is possible to send and receive audio data even in the case where a wall or a door is provided on a virtual space as an obstacle, for example. The virtual space includes a plurality of rooms. Each of the rooms is enclosed by walls and has a door at an entrance.

In the case where it is explained that avatars related to terminals 1 are respectively displayed inside and outside a room, for example, walls and a door may be caused to function as an obstacle and the avatar related to the terminal 1 displayed outside the door may be forbidden to output the audio on the basis of the audio data thus received. Thus, it is possible to restrict the audio data to be outputted only to the terminal 1 related to the avatar displayed in the room. Therefore, according to the network system of the present invention, it is possible to make a conversation including contents that the user does not want others to hear, such as a meeting, for example.

Further, in the case where the virtual space including the rooms as described above is displayed and audio data are sent and/or received, the rooms on the virtual space may correspond to the group 2 as described above. In this case, one terminal 1 is displayed in a room corresponding to a group 2 to which other terminal 1 belongs when the one terminal 1 is connected to the other terminal 1.

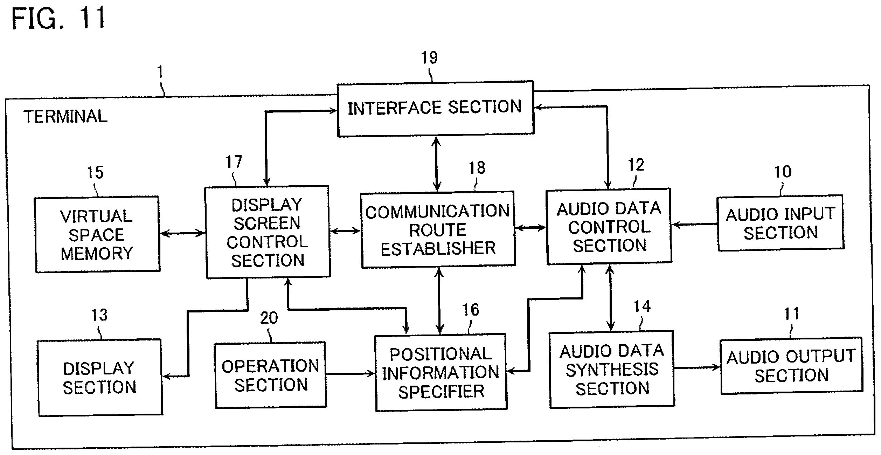

The avatar displayed on virtual space can be moved by means of operations of the terminal 1 related to the avatar. In this case, as shown in FIG. 11, the terminal 1 is further provided with an operation section 20. As the operation section 20, a mouse, a keyboard and a controller are mentioned, for example, but the present invention is not limited thereto. The operation section 20 allows the avatar to move. The operation section 20 gives operation information of the operation section 20 to the positional information specifier 16. The operation information includes a movement amount of the mouse to move the avatar and a movement direction of the mouse, for example.

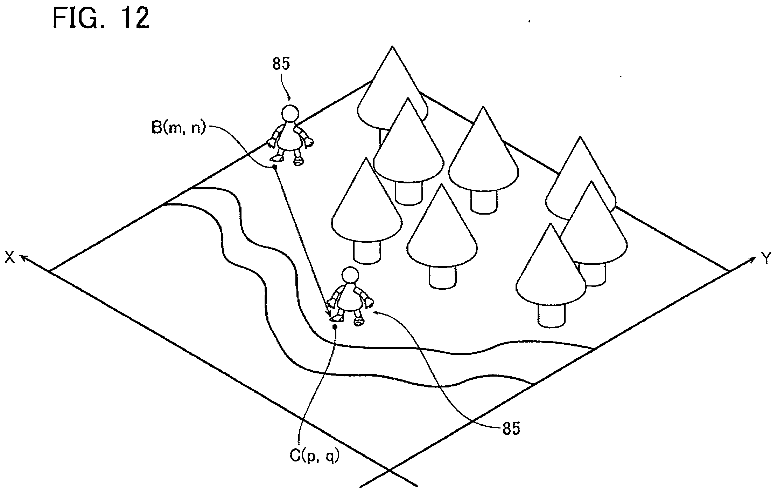

When the operation information is received, the positional information specifier 16 obtains a movement amount of the avatar from the current coordinates of the avatar on the basis of the movement amount of the mouse or the like to specify new coordinates of the avatar. For example, as shown in FIG. 12, the case where an avatar 85 is moved from the current position "B" (coordinates (m, n)) to a position "C" (coordinates (p, q)) by moving the operation section 20 such as the mouse will be described. When the mouse is moved so that the avatar 85 is moved in the direction from the position "B" (m, n) to the position "C" (p, q) on the virtual space on which the avatar 85 is displayed, the movement amount and the movement direction of the operation section 20 are given to the positional information specifier 16 as the operation information. When the operation information is received, the positional information specifier 16 analyzes the movement amount and the movement direction of the operation section 20, and obtains the movement amount of the avatar 85 by means of predetermined processing. Thus, the positional information specifier 16 specifies the position "C" (p, q) to become new coordinates of the avatar 85 as positional information. The positional information specifier 16 then gives the specified positional information to the display screen control section 17. The display screen control section 17 causes the display section 13 to display the scene in which the avatar 85 is moved from the position "B" (m, n) to the position "C" (p, q) on the virtual space on the basis of the positional information.

Thus, for example, in the case where loudness of audio made as output of the audio data is insufficient because the linear distance between the avatars is far or an obstacle exists on the straight line, one avatar can be moved so that the loudness of audio becomes sufficient, and this makes it possible to make a Chat smoothly.

In the case where an avatar related to a terminal 1 approaches, on the virtual space, other avatar in other group 2 to which the terminal 1 does not belong by means of operations of the operation section 20, the communication route establisher 18 can change the status of the terminal 1 to be connected to other terminal 1 so that the terminal 1 belongs to the group 2 to which the other terminal 1 belongs, whose avatar is approached by the avatar of the terminal 1, while taking into consideration of the communication condition. By utilizing the virtual space in this manner, it is possible to form or change or reconfigure groups. In the present invention, the communication between terminals 1 in the same group is advantageous compared with the communication between terminals 1 in respective other groups. Therefore, in the case where one terminal 1 wants to send and/or receive audio data to and/or from a specific terminal 1, the avatar related to the one terminal 1 is moved on the virtual space to approach the avatar related to the specific terminal 1, whereby the group is reconfigured. This makes it possible to change the network configuration easily.

Moreover, a terminal such as an audio source (for example, a radio) that makes a sound one way may be provided on the virtual space. The audio source does not receive audio data from other terminal 1. Audio data is always sent to each of the terminals 1 from the audio source. When the audio data is received from the audio source, the terminal 1 calculates a linear distance between the terminal 1 and the audio source, adjusts loudness of audio made as output of the audio data received from the audio source, and synthesizes the adjusted audio data and other audio data with the audio data synthesis section 14 to output it. Thus, a large number of users can listen to the radio in addition to a Chat by receiving the audio data from the audio source. The audio source is not limited to the radio. As another example of the audio source, the microphone is provided in the front of a cage in a zoo in the real world and a roar or cry may be sent as the audio data through the microphone. As still another example of the audio source, sounds or audio in a concert hole may be sent through a microphone provided in the concert hole. Namely, by utilizing the network system of the present invention, the user of the network system experience sounds or audio made in the real world even though the user is away from the spot in the real world.

An image of the avatar displayed on the virtual space may be stored in the virtual space memory 15. Alternatively, the image may be received from other terminal 1 when one terminal 1 is connected to the other terminal 1. The image to be displayed as the avatar may be changed by the user.

**Claims**

1. A network system constructed by connecting a plurality of terminals (1-M, 1-S) to each other so that information can be sent and/or received through peer-to-peer communication, the network system comprising a plurality of groups (2), each of the groups (2) being constituted from a plurality of terminals (1-M, 1-S),
   wherein each of the groups (2) comprises:

a master terminal (1-M) connected to other terminals in the group (2), the master terminal (1-M) functioning as a master; and
a plurality of slave terminals (1-S) connected to the master terminal (1-M), each of the slave terminals (1-S) functioning as a slave with respect to the master,
wherein each of the slave terminals (1-S) communicates with the master terminal (1-M) and the other slave terminals (1-S) in the group (2) to which the slave terminal (1-S) belongs, and the master terminal (1-M) communicates with master terminals (1-M) in other groups (2) in addition to the slave terminals (1-S) in the group (2) to which the master terminal (1-M) belongs, wherein, in the case where a slave terminal (1-S) communicates with a terminal (1-M, 1-S) in any other group (2), the slave terminal (1-S) communicates with the terminal (1-M, 1-S) via the master terminal (1-M) in the group (2) to which the slave terminal (1-S) belongs, wherein the plurality of terminals (1-M, 1-S) constituting a group (2) execute the peer-to-peer communication with each other,
each of the master terminal (1-M) and the slave terminals (1-S) comprises:
a virtual space memory (15) for storing information on a virtual space;
a positional information specifier (16) for specifying positional information of an avatar (81, 85) on the virtual space stored in the virtual space memory (15), the avatar (81, 85) being related to the terminal (1-M, 1-S); and
a display screen control section (17) that causes a display section (13) to display the virtual space, the avatar (81, 85) of the terminal (1-M, 1-S) and an avatar (82) of each of the other terminals (1-M, 1-S) on the basis of the virtual space stored in the virtual space memory (15) and the positional information specified by the positional information specifier (16),
the positional information specifier (16) specifies new coordinates (p, q) of the avatar (81, 85) of the corresponding terminal (1-M, 1-S) by calculating a movement amount of the avatar (81, 85) from current coordinates (m, n) of the avatar (81, 85) on the basis of a movement amount indicated by operation information from an operating section (20) of the corresponding terminal (1-M, 1-S) and then moves the avatar (81, 85) on the basis of positional information indicated by the specified coordinates (p, q) of the avatar (81, 85), and
in the case where the avatar (81, 85) of the corresponding terminal (1-M, 1-S) approaches an avatar (82) of another terminal (1-M, 1-S) that belongs to another group (2) to which the corresponding terminal (1-M, 1-S) does not belong, the corresponding terminal (1-M, 1-S) is allowed to be connected to a master terminal (1-M) in the other group (2) so that the corresponding terminal (1-M, 1-S) belongs to the other group (2), whereby the group (2) is reconfigured.

2. The network system according to claim 1, wherein a master group (3) is constructed from the master terminals (1-M) in the plurality of groups (2), one of the master terminals (1-M) among the master terminals (1-M) in the master group (3) being operated to function as a master in the master group (3), each of the other master terminals (1-M) in the master group (3) being operated to function as a slave in the master group (3).

3. The network system according to claim 1, wherein the terminal (1-M, 1-S) comprises:

    an audio input section (10) for inputting audio data to be sent and/or received with the peer-to-peer communication;
    an audio data synthesis section (14) for synthesizing the audio data received from another terminal (1-M, 1-S); and
    an audio output section (11) for outputting the audio data synthesized by the audio data synthesis section (14).

4. The network system according to claim 3, wherein the master terminal (1-M) causes the audio data synthesis section (14) to synthesize the audio data received from any terminal (1-M, 1-S) in the group (2) to which the master terminal (1-M) belongs and the audio data inputted through the audio input section (10) of the master terminal (1-M), and the master terminal (1-M) sends the synthesized audio data to a master terminal (1-M) in another group (2).

5. The network system according to claim 1, wherein the terminal (1-M, 1-S) receives positional information of an avatar (82) related to another terminal (1-M, 1-S) specified by the positional information specifier (16) of the other terminal (1-M, 1-S), the other terminal (1-M, 1-S) belonging to the group (2) to which the terminal (1-M, 1-S) belongs,
wherein the positional information specifier (16) specifies positional information of an avatar (82) related to another terminal (1-M, 1-S) in the group (2) to which the corresponding terminal (1-M, 1-S) belongs on the virtual space from positional information of the avatar (82) related to the other terminal (1-M, 1-S), and
wherein the display screen control section (17) of the terminal (1-M, 1-S) causes the display section (13) to display the avatar (82) related to the other terminal (1-M, 1-S) belonging to the group (2) to which the terminal (1-M, 1-S) belongs.

6. The network system according to claim 5, wherein the terminal (1-M, 1-S) causes the audio data synthesis section (14) to adjust loudness of audio made as an output of the audio data received from the other terminal (1-M, 1-S) so as to become small as a linear distance (L) between a position (A) based on the positional information of the avatar (81) related to the terminal (1-M, 1-S) on the virtual space and a position (D) based on the positional information of the avatar (82) related to the other terminal (1-M, 1-S) in the group (2) to which the terminal (1-M, 1-S) belongs on the virtual space becomes longer, and to synthesize the audio data.

7. The network system according to claim 5, wherein, in the case where an obstacle (5) exists on a straight line connected between a position (A) based on the positional information of the avatar (81) related to the terminal (1-M, 1-S) on the virtual space and a position (D) based on the positional information of the avatar (82) related to the other terminal (1-M, 1-S) in the group (2) to which the terminal (1-M, 1-S) belongs on the virtual space, the terminal (1-M, 1-S) causes the audio data synthesis section (14) to synthesize the audio data so as to reduce loudness of audio on the basis of the audio data received from the other terminal (1-M, 1-S).

**Patentansprüche**

1. Netzwerksystem, aufgebaut durch Verbinden einer Mehrzahl von Endgeräten (1-M, 1-S) miteinander, so dass Information über Peer-to-Peer-Kommunikation gesendet und/oder empfangen werden kann, wobei das Netzwerksystem eine Mehrzahl von Gruppen (2) umfasst, wobei jede der Gruppen (2) aus einer Mehrzahl von Endgeräten (1-M, 1-S) gebildet wird,
wobei jede der Gruppen (2) umfasst:

    ein Master-Endgerät (1-M), verbunden mit anderen Endgeräten in der Gruppe (2), wobei das Master-Enderät (1-M) als ein Master arbeitet; und
    eine Mehrzahl von Slave-Endgeräten (1-S), die mit dem Master-Endgerät (1-M) verbunden sind, wobei jedes der Slave-Endgeräte (1-S) als ein Slave bezüglich des Masters arbeitet,
    wobei jedes der Slave-Endgeräte (1-S) mit dem Master-Endgerät (1-M) und den anderen Slave-Endgeräten (1-S) in der Gruppe (2) kommuniziert, zu der das Slave-Endgerät (1-S) gehört, und das Master-Endgerät (1-M) mit Master-Endgeräten (1-M) in anderen Gruppen (2), zusätzlich zu den Slave-Endgeräten (1-S) in der Gruppe (2), zu der das Master-Endgerät (1-M) gehört, kommuniziert,

wobei, falls ein Slave-Endgerät (1-S) mit einem Endgerät (1-M, 1-S) in einer beliebigen anderen Gruppe (2) kommuniziert, das Slave-Endgerät (1-S) mit dem Endgerät (1-M, 1-S) über das Master-Endgerät (1-M) in der Gruppe (2), zu der das Slave-Endgerät (1-S) gehört, kommuniziert, wobei

die Mehrzahl von Endgeräten (1-M, 1-S), die eine Gruppe (2) bilden, Peer-to-Peer-Kommunikation miteinander ausführen,

jedes von dem Master-Endgerät (1-M) und den Slave-Endgeräten (1-S) umfasst:

einen Speicher (15) für einen virtuellen Raum zum Speichern von Information über einen virtuellen Raum;

eine Spezifizierungseinrichtung (16) für Positionsinformation zum Spezifizieren von Positionsinformation eines Avatars (81, 85) in dem in dem Speicher (15) für einen virtuellen Raum gespeicherten virtuellen Raum, wobei der Avatar (81, 85) mit dem Endgerät (1-M, 1-S) in Beziehung steht; und

einen Steuerabschnitt (17) für einen Anzeigebildschirm, der einen Anzeigeabschnitt (13) veranlasst, den virtuellen Raum, den Avatar (81, 85) des Endgeräts (1-M, 1-S) und einen Avatar (82) jedes der anderen Endgeräte (1-M, 1-S), beruhend auf dem in dem Speicher (15) für einen virtuellen Raum gespeicherten virtuellen Raum und der von der Spezifizierungseinrichtung (16) für Positionsinformation spezifizierten Positionsinformation anzuzeigen,

die Spezifizierungseinrichtung (16) für Positionsinformation neue Koordinaten (p, q) des Avatars (81, 85) des entsprechenden Endgeräts (1-M, 1-S) durch Berechnen einer Bewegungsmenge des Avatars (81, 85) von aktuellen Koordinaten (m, n) des Avatars (81, 85), beruhend auf einer Bewegungsmenge, die durch eine Bedienungsinformation von einem Bedienungsabschnitt (20) des entsprechenden Endgeräts (1-M, 1-S) angegeben wird, spezifiziert und dann den Avatar (81, 85) auf der Basis der durch die spezifizierten Koordinaten (p, q) des Avatars (81, 85) angezeigten Positionsinformation bewegt, und

falls der Avatar (81, 85) des entsprechenden Endgeräts (1-M, 1-S) sich einem Avatar (82) eines anderen Endgeräts (1-M, 1-S), welches zu einer anderen Gruppe (2) gehört, zu der das entsprechende Endgerät (1-M, 1-S) nicht gehört, annähert, es dem entsprechenden Endgerät (1-M, 1-S) erlaubt ist, mit einem Master-Endgerät (1-M) in der anderen Gruppe (2) verbunden zu werden, so dass das entsprechende Endgerät (1-M, 1-S) zu der anderen Gruppe (2) gehört, wodurch die Gruppe (2) umkonfiguiert wird.

2. Netzwerksystem nach Anspruch 1, wobei eine Mastergruppe (3) aus den Master-Endgeräten (1-M) in der Mehrzahl der Gruppen (2) aufgebaut ist, eines der Master-Endgeräte (1-M) unter den Master-Endgeräten (1-M) in der Mastergruppe (3) betrieben wird, um als ein Master in der Mastergruppe (3) zu arbeiten, und jedes der anderen Master-Endgeräte (1-M) in der Mastergruppe (3) betrieben wird, um als ein Slave in der Mastergruppe (3) zu arbeiten.

3. Netzwerksystem nach Anspruch 1, wobei das Endgerät (1-M, 1-S) umfasst:

einen Audioeingabeabschnitt (10) zum Eingeben von Audiodaten, die mit der Peer-to-Peer-Kommunikation zu versenden und/oder zu empfangen sind;

einen Audiodatensyntheseabschnitt (14) zum Synthetisieren der von einem anderen Endgerät (1-M, 1-S) empfangenen Audiodaten; und

einen Audioausgabeabschnitt (11) zum Ausgeben der durch den Audiodatensyntheseabschnitt (14) synthetisierten Audiodaten.

4. Netzwerksystem nach Anspruch 3, wobei das Master-Endgerät (1-M) den Audiodatensyntheseabschnitt (14) veranlasst, die von einem beliebigen Endgerät (1-M, 1-S) in der Gruppe (2), zu der das Master-Endgerät (1-M) gehört, empfangenen Audiodaten und die durch den Audioeingabeabschnitt (10) des Master-Endgeräts (1-M) eingegebenen Audiodaten zu synthetisieren und das Master-Endgerät (1-M) die synthetisierten Audiodaten an ein Masterendgerät (1-M) in einer anderen Gruppe (2) versendet.

5. Netzwerksystem nach Anspruch 1, wobei das Endgerät (1-M, 1-S) Positionsinformation eines Avatars (82) empfängt, der zu einem anderen Endgerät (1-M, 1-S), spezifiziert durch die Spezifizierungseinrichtung (16) für Positionsinformation des anderen Endgeräts (1-M, 1-S), in Beziehung steht, wobei das andere Endgerät (1-M, 1-S) zu der Gruppe (2) gehört, zu der das Endgerät (1-M, 1-S) gehört,

wobei die Spezifizierungseinrichtung (16) für Positionsinformation Positionsinformation eines Avatars (82), der zu einem anderen Endgerät (1-M, 1-S) in der Gruppe (2), zu der das entsprechende Endgerät (1-M, 1-S) gehört, in Beziehung steht, in dem virtuellen Raum spezifiziert, aus Positionsinformation des zu dem anderen Endgerät (1-M, 1-S) in Beziehung stehenden Avatars (82), und

wobei der Steuerabschnitt (17) für einen Anzeigebildschirm des Endgeräts (1-M, 1-S) den Anzeigeabschnitt (13) veranlasst, den zu dem anderen Endgerät (1-M, 1-S), das zu der Gruppe (2) gehört, zu der das Endgerät (1-M, 1-S) gehört, in Beziehung stehenden Avatar (82) anzuzeigen.

6. Netzwerksystem nach Anspruch 5, wobei das Endgerät (1-M, 1-S) den Audiodatensyntheseabschnitt (14) veranlasst, die Lautstärke von einer Audioausgabe aus den von dem anderen Endgerät (1-M, 1-S) empfangenen Audiodaten so einzustellen, dass sie klein wird, wenn ein linearer Abstand (L) zwischen einer Position (A), basierend auf der Positionsinformation des in Beziehung zu dem Endgerät (1-M, 1-S) stehenden Avatars (81) in dem virtuellen Raum und einer Position (D), basierend auf der Positionsinformation des in Beziehung zu dem anderen Endgerät (1-M, 1-S) in der Gruppe (2), zu der das Endgerät (1-M, 1-S) gehört, stehenden Avatars (82) in dem virtuellen Raum länger wird, und die Audiodaten zu synthetisieren.

7. Netzwerksystem nach Anspruch 5, wobei, falls ein Hindernis (5) auf einer geraden Linie, die eine Position (A), basierend auf der Positionsinformation des in Beziehung zu dem Endgerät (1-M, 1-S) stehenden Avatars (81) in dem virtuellen Raum und eine Position (D), basierend auf der Positionsinformation des in Beziehung zu dem anderen Endgerät (1-M, 1-S) in der Gruppe (2), zu der das Endgerät (1-M, 1-S) gehört, stehenden Avatars (82) in dem virtuellen Raum untereinander verbindet, existiert, das Endgerät (1-M, 1-S) den Audiodatensyntheseabschnitt (14) veranlasst, die Audiodaten so zu synthetisieren, dass die Lautstärke von Audio beruhend auf den von dem anderen Endgerät (1-M, 1-S) empfangenen Audiodaten reduziert wird.

**Revendications**

1. Système de réseau constitué par la connexion d'une pluralité de terminaux (1-M, 1-S) les unes aux autres, de sorte que des informations peuvent être envoyées et/ou reçues par communication pair-à-pair, le système de réseau comprenant une pluralité de groupes (2), chacun des groupes (2) étant constitué d'une pluralité de terminaux (1-M, 1-S), dans lequel chacun des groupes (2) comprend :

un terminal maître (1-M) connecté à d'autres terminaux du groupe (2), le terminal maître (1-M) faisant office de maître ; et
une pluralité de terminaux esclaves (1-S) connectés au terminal maître (1-M), chacun des terminaux esclaves (1-S) faisant office d'esclaves du maître ,
dans lequel chacun des terminaux esclaves (1-S) communique avec le terminal maître (1-M) et les autres terminaux esclaves (1-S) du groupe (2) auquel appartient le terminal esclave (1-S), et le terminal maître (1-M) communique avec des terminaux maîtres (1-M) d'autres groupes (2) en plus des terminaux esclaves (1-S) du groupe (2) auquel appartient le terminal maître (1-M),

dans lequel, lorsqu'un terminal esclave (1-S) communique avec un terminal (1-M, 1-S) de tout autre groupe (2), le terminal esclave (1-S) communique avec le terminal (1-M, 1-S) par l'intermédiaire du terminal maître (1-M) du groupe (2) auquel appartient le terminal esclave (1-S),

dans lequel la pluralité de terminaux (1-M, 1-S) formant un groupe (2) communiquent en pair-à-pair les uns avec les autres,

chacun des terminaux que sont le terminal maître (1-M) et les terminaux esclaves (1-S) comprennent :

une mémoire d'espace virtuel (15) servant à stocker des informations dans un espace virtuel ;
un spécificateur d'informations de position (16) servant à spécifier des informations de position d'un avatar (81, 85) dans l'espace virtuel stocké dans la mémoire d'espace virtuel (15), l'avatar (81, 85) étant lié au terminal (1-M, 1-S) ; et

une section de commande d'écran d'affichage (17) qui amène une section d'affichage (13) à afficher l'espace virtuel, l'avatar (81, 85) du terminal (1-M, 1-S) et un avatar (82) de chacun des autres terminaux (1-M, 1-S) en se fondant sur l'espace virtuel stocké dans la mémoire d'espace virtuel (15) et sur les informations de position spécifiées par le spécificateur d'informations de position (16),

le spécificateur d'informations de position (16) spécifie de nouvelles coordonnées (p, q) de l'avatar (81, 85) du terminal correspondant (1-M, 1-S) en calculant une quantité de mouvement de l'avatar (81, 85) à partir de coordonnées actuelles (m, n) de l'avatar (81, 85) en se fondant sur une quantité de mouvement indiquée par des informations d'actionnement d'une section d'actionnement (20) du terminal correspondant (1-M, 1-S), puis déplace l'avatar (81, 85) en se fondant sur les informations de position indiquées par les coordonnées spécifiées (p, q) de l'avatar (81, 85), et

lorsque l'avatar (81, 85) du terminal correspondant (1-M, 1-S) s'approche d'un avatar (82) d'un autre terminal (1-M, 1-S) qui appartient à un autre groupe (2) auquel le terminal correspondant (1-M, 1-S) n'appartient pas, le terminal correspondant (1-M, 1-S) est autorisé à se connecter à un terminal maître (1-M) de l'autre groupe (2) de telle manière que le terminal correspondant (1-M, 1-S) appartient à l'autre groupe (2), de sorte que le groupe (2) est reconfiguré.

2. Système de réseau selon la revendication 1, dans lequel un groupe maître (3) est constitué des terminaux maîtres (1-M) de la pluralité de groupes (2), l'un des terminaux maîtres (1-M) parmi les terminaux maîtres (1-M) du groupe maître (3) fonctionnant de manière à servir de maître du groupe maître (3), chacun des terminaux maîtres (1-M) du groupe maître (3) fonctionnant de manière à servir d'esclave du groupe maître (3).

3. Système de réseau selon la revendication 1, dans lequel le terminal (1-M, 1-S) comprend :

    une section d'entrée audio (10) pour entrer des données audio à envoyer et/ou recevoir par communication pair-à-pair ;
    une section de synthèse de données audio (14) pour synthétiser des données audio reçues en provenance d'un autre terminal (1-M, 1-S) ; et
    une section de sortie audio (11) pour sortir les données audio synthétisées par la section de synthèse de données audio (14).

4. Système de réseau selon la revendication 3, dans lequel le terminal maître (1-M) amène la section de synthèse de données audio (14) à synthétiser les données audio reçues en provenance d'un quelconque terminal (1-M, 1-S) du groupe (2) auquel appartient le terminal maître (1-M) et les données audio entrées par l'intermédiaire de la section d'entrée audio (10) du terminal maître (1-M), et le terminal maître (1-M) envoie les données audio synthétisées à un terminal maître (1-M) d'un autre groupe (2).

5. Système de réseau selon la revendication 1, dans lequel le terminal (1-M, 1-S) reçoit des informations de position d'un avatar (82) lié à un autre terminal (1-M, 1-S) spécifiées par le spécificateur d'informations de position (16) de l'autre terminal (1-M, 1-S), l'autre terminal (1-M, 1-S) appartenant au groupe (2) auquel appartient le terminal (1-M, 1-S), dans lequel le spécificateur d'informations de position (16) spécifie les informations de position d'un avatar (82) lié à un autre terminal (1-M, 1-S) du groupe (2) auquel appartient le terminal correspondante (1-M, 1-S) dans l'espace virtuel à partir d'informations de position de l'avatar (82) lié à l'autre terminal (1-M, 1-S), et dans lequel la section de commande d'écran d'affichage (17) de l'autre terminal (1-M, 1-S) amène la section d'affichage (13) à afficher l'avatar (82) lié à l'autre terminal (1-M, 1-S) appartenant au groupe (2) auquel appartient le terminal (1-M, 1-S).

6. Système de réseau selon la revendication 5, dans lequel le terminal (1-M, 1-S) amène la section de synthèse de données audio (14) à ajuster le volume de l'audio généré en tant que sortie des données audio reçues de l'autre terminal (1-M, 1-S) de manière à ce qu'il devienne moins fort à mesure qu'une distance linéaire (L) entre une position (A) fondée sur les informations de position de l'avatar (81) lié au terminal (1-M, 1-S) dans l'espace virtuel et une position (D) fondée sur les informations de position de l'avatar (82) lié à l'autre terminal (1-M, 1-S) du groupe (2) auquel appartient le terminal (1-M, 1-S) dans l'espace virtuel s'allonge, et à synthétiser les données audio.

7. Système de réseau selon la revendication 5, dans lequel, dans un cas où il existe un obstacle (5) sur une ligne droite reliant une position (A) fondée sur les informations de position de l'avatar (81) lié au terminal (1-M, 1-S) dans l'espace virtuel et une position (D) fondée sur les informations de position de l'avatar (82) lié à l'autre terminal (1-M, 1-S) du groupe (2) auquel appartient le terminal (1-M, 1-S) dans l'espace virtuel, le terminal (1-M, 1-S) amène la section de synthèse de données audio (14) à synthétiser les données audio de manière à réduire le volume de l'audio en se fondant sur les données audio reçue en provenance de l'autre terminal (1-M, 1-S).

FIG. 1

# FIG. 2

Lv4

Lv3

Lv2

Lv1

⊞ : Group

# FIG. 3

EP 1 871 073 B1

FIG. 4

EP 1 871 073 B1

# FIG. 5

```
              ┌─────────────┐
              │    START    │
              └─────────────┘
                     │
                     ▼
        ┌──────────────────────────────┐
        │  SELECTION OF VIRTUAL SPACE   │──── S10
        └──────────────────────────────┘
                     │
                     ▼
        ┌──────────────────────────────┐
        │ DISPLAY OF SELECTED VIRTUAL   │──── S11
        │           SPACE               │
        └──────────────────────────────┘
                     │
                     ▼
        ┌──────────────────────────────┐
        │   SEARCH OF TERMINAL THAT     │──── S12
        │ DISPLAYS THE SAME VIRTUAL SPACE│
        └──────────────────────────────┘
                     │
                     ▼
        ┌──────────────────────────────┐
        │ PROCESS TO CONNECT SEARCHED   │──── S13
        │  TERMINAL TO OTHER TERMINAL   │
        └──────────────────────────────┘
                     │
                     ▼
        ┌──────────────────────────────┐
        │    PROCESS FOR AUDIO DATA     │──── S14
        └──────────────────────────────┘
                     │
                     ▼
              ╱──────────────╲
       No    ╱                ╲      S15
      ◄─────┤  DISCONNECTION ? │
             ╲                ╱
              ╲──────────────╱
                     │ Yes
                     ▼
              ┌─────────────┐
              │     END     │
              └─────────────┘
```

FIG. 6

START

SEARCH OF GROUP TO BE AFFILIATED — S301

ACQUIREMENT OF IP ADDRESS OF TERMINAL IN GROUP — S302

CONNECTION TO OTHER TERMINAL — S303

SELECTION OF MASTER TERMINAL IN AFFILIATING GROUP — S304

S305
OWN TERMINAL IS MASTER TERMINAL ? — No
Yes

SEARCH OF MASTER GROUP TO BE AFFILIATED — S306

ACQUIREMENT OF IP ADDRESS OF TERMINAL IN GROUP — S307

CONNECTION TO OTHER MASTER TERMINAL — S308

SELECTION OF MASTER TERMINAL IN AFFILIATING MASTER GROUP — S309

S310
OWN TERMINAL IS MASTER TERMINAL ? — No
Yes

S311
IS THERE OTHER MASTER GROUP OTHER THAN MASTER GROUP THAT OWN TERMINAL AFFILIATES ? — Yes
No

DETERMINATION OF DISPLAY POSITION OF CHARACTER RELATED TO OWN TERMINAL AND SPECIFICATION OF POSITIONAL INFORMATION — S312

ACQUIREMENT OF POSITIONAL INFORMATION OF CHARACTER RELATED TO OTHER TERMINAL — S313

DISPLAY OF CHARACTER — S314

END

24

FIG. 7

```
                    ( START )
                        │
                        ▼
        ┌──────────────────────────────┐
        │      INPUT AUDIO DATA         │── S101
        └──────────────────────────────┘
                        │
                        ▼
        ┌──────────────────────────────┐
        │    GIVE AUDIO DATA TO AUDIO   │── S102
        │     DATA CONTROL SECTION      │
        └──────────────────────────────┘
                        │
                        ▼
        ┌──────────────────────────────┐
        │   SPECIFY POSITIONAL INFORMATION │── S103
        │        OF CHARACTER           │
        └──────────────────────────────┘
                        │
                        ▼
        ┌──────────────────────────────┐
        │ SEND SPECIFIED POSITIONAL INFORMATION │── S104
        │   TO AUDIO DATA CONTROL SECTION │
        └──────────────────────────────┘
                        │
                        ▼
        ┌──────────────────────────────┐
        │ CONFIRM OF OTHER CONNECTED TERMINAL │── S105
        └──────────────────────────────┘
                        │
                        ▼
                   ◇ S106
              OWN TERMINAL              Yes
              IS SLAVE TERMINAL ────────────┐
                   ?                         │
                   │ No                      │
                   ▼                         │
        ┌──────────────────────────────┐    │
        │ GIVE INPUTTED AUDIO DATA AND AUDIO RECEIVED │    │
        │  FROM OTHER TERMINAL IN AFFILIATING │── S107 │
        │ GROUP TO AUDIO DATA SYNTHESIS SECTION │    │
        └──────────────────────────────┘    │
                        │                    │
                        ▼                    │
        ┌──────────────────────────────┐    │
        │     SYNTHESIZE AUDIO DATA     │── S108 │
        └──────────────────────────────┘    │
                        │                    │
                        ▼                    │
        ┌──────────────────────────────┐    │
        │    GIVE AUDIO DATA TO AUDIO   │── S109 │
        │     DATA CONTROL SECTION      │    │
        └──────────────────────────────┘    │
                        │                    │
                        ▼                    │
        ┌──────────────────────────────┐    │
        │  SEND POSITIONAL INFORMATION AND │── S110 │
        │   SYNTHESIZED AUDIO DATA TO   │    │
        │  MASTER TERMINAL IN OTHER GROUP │    │
        └──────────────────────────────┘    │
                        │◄───────────────────┘
                        ▼
        ┌──────────────────────────────┐
        │   SEND POSITIONAL INFORMATION │── S111
        │  AND AUDIO DATA TO ALL OF OTHER │
        │  TERMINALS IN AFFILIATING GROUP │
        └──────────────────────────────┘
                        │
                        ▼
                    ( END )
```

# FIG. 8

START

READ OUT INFORMATION ON VIRTUAL SPACE — S201

GIVE AUDIO DATA TO AUDIO DATA CONTROL SECTION — S202

SPECIFY POSITIONAL INFORMATION OF CHARACTER — S203

GIVE SPECIFIED POSITIONAL INFORMATION TO AUDIO DATA CONTROL SECTION — S204

CALCULATE LINEAR DISTANCE BETWEEN CHARACTER RELATED TO OWN TERMINAL AND CHARACTER RELATED TO OTHER TERMINAL TO WHICH AUDIO DATA IS SENT — S205

GIVE AUDIO DATA WHOSE LOUDNESS IS ADJUSTED TO AUDIO DATA SYNTHESIS SECTION — S206

ADJUST LOUDNESS OF AUDIO MADE BY OUTPUT OF AUDIO DATA IN ACCORDANCE WITH CALCULATED LINEAR DISTANCE — S207

IS THERE OTHER AUDIO DATA TO BE OUTPUTTED ? — S208

No

Yes

SYNTHESIZE AUDIO DATA WHOSE LOUDNESS IS ADJUSTED AND OTHER AUDIO DATA — S209

S211

GIVE SYNTHESIZE AUDIO DATA TO AUDIO OUTPUT SECTION

GIVE SYNTHESIZE AUDIO DATA TO AUDIO OUTPUT SECTION — S210

OUTPUT RECEIVED AUDIO DATA — S212

END

FIG. 9

FIG. 10

EP 1 871 073 B1

FIG. 11

EP 1 871 073 B1

FIG. 12

85

B(m, n)

X

Y

C(p, q)

85

EP 1 871 073 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006169351 A
- JP 2004312331 A

- US 2004098370 A1

### Non-patent literature cited in the description

- **JIN LI.** MutualCast: A Serverless Peer-to-Peer Multiparty Real-Time Audio Conferencing System. IEEE, 2005

- Peer-to-Peer Architecture and Protocol for a Massively Multiplayer Online Game. **M. MERABATI ; A. EL RHALIBI.** Global Telecommunications conference workshops. IEEE, 2004